# EUROPEAN PATENT APPLICATION

(11) **EP 2 187 613 A1**
(43) Date of publication of application: **19.05.2010**
(21) Application number: 08305804.0
(22) Date of filing: 14.11.2008
(51) Int. Cl.: H04M 15/00

(54) **Generation of an intelligent invoice following a subscriber behavioural profile analysis based on billing system**

(71) Applicant: Alcatel Lucent, 75008 Paris (FR)
(72) Inventor: Soudani, Mounir, 91620 Nozay (FR); Houllier, Jean-Roch, 78141 Velizy (FR)
(74) Representative: Hedarchet, Stéphane

(57) **Abstract**

A method for generating invoices related to subscribers of a telecommunication network, **characterized in that :**
- collecting billing data corresponding to said subscribers,
- gathering said collected data with heterogeneous data coming from other network equipments of the telecommunication network, such as Intelligent network elements, home location registers, Authentification Authorisation Accounting server, and data coming from other systems such as resource partners, roaming data, to enrich the data corresponding to the users,
- accessing to a variety of subscriber criteria via the gathering step, such as call characteristics, subscribers characteristics and related attributes, subscription characteristics, subscriber payment modes and financial behaviour, subscribers' location,
- for each billing zone, analyzing the subscribers' population by selecting it according to a subset of said criteria and by applying statistical means thereon,
- generating invoices related to the subscribers as a function of the analysis results for each billing zone.

Associated system.

## Description

The present invention is related to a method for generating invoices related to subscribers of a telecommunication network.

The telecom operators need to learn easily and in a near real time about "how their subscribers behave" on their network and in their day-to-day usage of their cell phones.

These information are very useful to adapt their marketing campaigns, to anticipate their revenues, to manage recurrent problems, etc.

For that purpose, the telecom operator needs to exploit a large range of data coming from very heterogeneous telecom systems, such as those coming from the billing system, the intelligent network, the home location registers, ...

The billing system is, by definition, the front office application of all the telecom equipments.

The billing system is responsible of:
- Provisioning the subscribers on the telecom equipments
- Storing personal information about the subscribers
- Gathering, processing and storing the subscribers calls details, whatever in the frame of local and roaming calls
- Generating and managing the invoices of the billable subscribers
- Managing the payments of invoices, services and goods
- Managing point of sales and dealer
- Managing taxes
- Managing bad payers and related problematic
Therefore, the billing system has the capability to gather in its own database:
- The billing data which exists only in its database and nowhere else in the network;
- But also, a large variety of heterogeneous data coming from other network equipments such as Intelligent network (IN), home location registers (HLR), Authentification Authorisation Accounting server (AAA for Wimax), etc.
- A large variety of data coming from other systems (resource partners, roaming and interconnect, accounts, ...).

The Applicant's Research&Development teams realized that, today, there is no billing system, which exploits this capability, i.e. offering the whole billing subscribers population analysis by merging such kind of heterogeneous data. Moreover, in the majority of the billing systems (for instance in Convergys, LHS, Amdocs or Intec ones) the invoice itself can be considered as a static object, used for the bill generation and which does not include any possible automated customization on a per subscriber basis.

The best existing solution is the data mining software-based solution, which extracts and exploits huge data coming from heterogeneous data sources.

This solution is :
- Very expensive: cost of the software and of the integration
- Must be adapted to the telecom operator needs
- External to the billing system
- Not a near real time solution

The present invention aims at introducing an original billing subscriber population analysis, which main goal is to lead to the generation of a more "intelligent" invoice ; "the invoice", being, as said, the central element of the billing system.

The important idea coming with the invention is to consider the invoice as an implicit media of communication towards the postpaid subscribers population, taking into account that an invoice is produced regularly, e.g. on a monthly basis, for each postpaid subscriber.

The principle is thus to make its usage possible by transforming the invoice in a dynamic support allowing a more personalized communication.

Moreover, the present invention is fully linked, as mentioned, to the invoice object, which is a specific billing object used for the postpaid subscriber management when invoicing their different expenses.

The object of the present invention, according to an embodiment, is a method for generating invoices related to subscribers of a telecommunication network, **characterized in that** :
- collecting billing data corresponding to said subscribers,
- gathering said collected data with heterogeneous data coming from other network equipments of the telecommunication network, such as Intelligent network elements, home location registers, Authentification Authorisation Accounting server, and data coming from other systems such as resource partners, roaming data, to enrich the data corresponding to the users,
- accessing to a variety of subscriber criteria via the gathering step, such as call characteristics, subscribers characteristics and related attributes, subscription characteristics, subscriber payment modes and financial behaviour, subscribers' location,
- for each billing zone, analyzing the subscribers' population by selecting it according to a subset of said criteria and by applying statistical means thereon,
- generating invoices related to the subscribers as a function of the analysis results for each billing zone.

Today, main billing systems do not offer such an analysis and associated method, which would allow in a near future to personalize the invoice of billing subscribers, depending to their belonging to a given "billing zone" based and built on notably a geographical criterion.

In the prior art, there are billing data available only in the billing system. Thanks to the invention, these data can be crossed with data coming from other systems (IN, HLR, ..) which are collected by the billing system via CDR processing and provisioning. Therefore, the billing system according to the invention has the ability to contain various data type.

According to an embodiment of the invention, the analysis step takes into account, for each billing zone, a zone confidence value and a respective threshold, which may provide with a bad payers information based, and in that the analysis step takes into account a zone relevance value which is related to the pertinence of the used services.

According to an embodiment of the invention, the zone confidence formula is fixed by the network operator as a configuration data.

According to an embodiment of the invention, the analysis results are displayed in the reporting manager's display means, using a cartographical background to display the various consolidated data at the billing zone level.

According to an embodiment of the invention, the different billing zones are proposed, on the reporting manager's display means, through a list, for instance the ones which the Zone confidence value and/or the Zone relevance value overpass (or is below, depending the indicator usage) a set of thresholds previously fixed by the operator, and in that the network operator is proposed, following the different obtained values, to get an automatic filling of related subscribers invoices, considering the operator may have preconfigured a set of messages to be addressed to the different subscribers in relationship with the billing zone results and characteristics.

The object of the present invention, according to an embodiment, is also a system for the implementation of the method according to the invention.

Other objects and further features of the present invention will be apparent from the following detailed description when read in conjunction with the accompanying drawings :

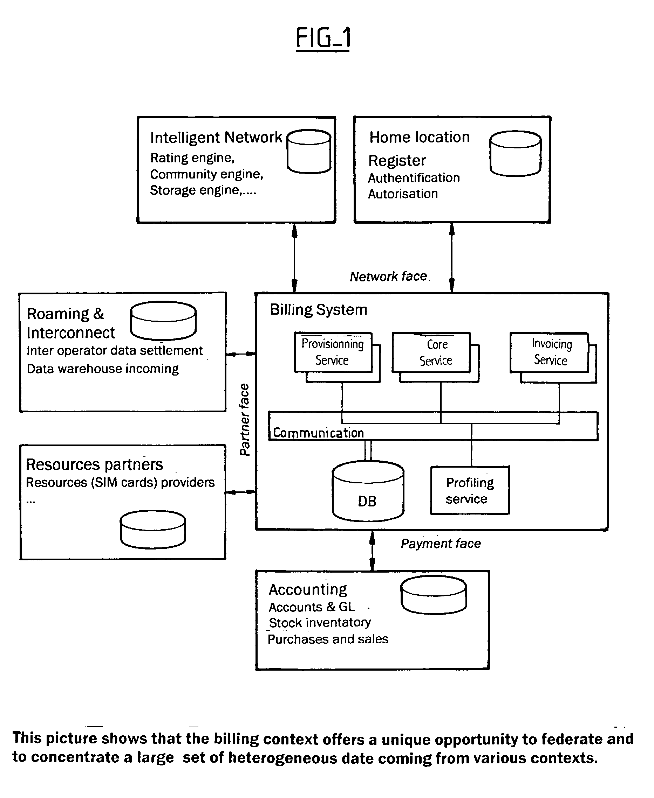

- Fig. 1 schematically illustrates an embodiment of a system according to the invention,
- Figure 2 to figure 4 illustrates the major characteristics of an embodiment of the method according to the invention.

A description will hereinafter be given of embodiments of the present invention, by referring to the drawings

The basic idea of the invention is to propose a method to get a full view of the telecom operator subscribers based on the billing system unique capability to:
1) Gather its proper data and heterogeneous data coming from different equipments in one database.
2) Access to a large variety of subscriber information type:
   Call basic characteristics focused:
      a. Call and usage details: date, time, call type, quantities
         Subscriber-User characteristics/main basic attributes focused:
      b. Personal information and profiles
         Subscriber-User subscription characteristics focused:
      c. Services and products
      d. Roaming
         Subscriber-User payment modes and financial behavior focused:
      e. Invoices
      f. Payments and taxes
      g. Bad payers, delays, ...
         Location focused (geographic dimension):
      h. Zoning information,
Etc.

For that purpose, the main principles of an embodiment of the invention are the following ones:
- Data used are not only pure billing & internal data but also important and mandatory ones, coming from the network, such as the zoning information, available at subscriber level. This is such a full set of heterogeneous data to be used; The network operator can select the main criteria (and data) he wants to highlight in the analysis and "billing zone" characterization;
- The analysis introduces the principle of a "per billing zone" subscribers analysis: the idea is to allow in first the operator to choose an level of aggregation of areas, which may be, as for instance, the different neighborhoods of a given town, a town, a region, etc. For that purpose, the MMI (Man Machine Interface) offers him to do the choice. Geographical files are stored in the database as vectors files; they are used when making the analysis and calculating related values per "billing zone".

The criteria used to associate the postpaid subscribers to the billing zone, are for example within the followings:
Example 1: The postpaid subscribers personal address is used. Therefore, a subscriber belongs to the billing zone related to its geographical address : the address is thus mapped by a simple address matching on the map and "attached" to the right geographical zone. When computing the different below-mentioned indicators (zone confidence, zone relevance), the data analysis considers all the traffic (calls, SMS, etc.) of the postpaid subscribers which is related to the billing zone wherever the calls are originated from.
Example 2: We can use the additional "home zone" information (also available in the billing database) as an option to refine the analysis. In fact, the subscriber belongs to the billing zone based on its geographical address (as in the example 1) but the data analysis considers only the calls originated from the subscriber "home zone" when computing indicators at the billing zone level.

- Several values are then calculated and reported per "a billing zone" approach, including several indicators, of which what it is called "Zone confidence" and "Zone relevance": their formula may be fixed by the operator as a configuration data: for instance, the operator may decide to calculate the Zone confidence value using the bad payers information contained in the database: hence, in that case, for each billing zone, the data will be consolidated (for instance as an average) for all the subscribers which zoning corresponds to a given billing zone;
- Result 1: The resulting analysis can be displayed in the reporting manager's PC, using a cartographical background to display the various consolidated data at billing zone level. However, this display is optional as the operator may be interested only in the result 2 (see below).
- Result 2: Indeed, as a second result, the different billing zones may be proposed through a list, for instance the ones which "Zone confidence" and/or "Zone relevance values overpass (or is below, depending the indicator usage) a set of thresholds previously fixed by the operator. Formula and contributing criteria of zones confidence and relevance is fully open (operator's choice, simple configuration data). The operator is then proposed, following the different obtained values to get an automatic filling of related subscribers invoices, considering the operator may have preconfigured, by configuration data, a set of messages to be addressed to the different subscribed in relationship with the billing zone results and characteristics.

Here-below are described an example of simple indicators related to the service usage :
the example is based on the assumption that the operator has focused its analysis on the different used services per billing zone. The operator may thus have programmed the following indicators such as:
   - Zone_relevance_SMS_service
   - Zone_relevance_MMS_service
   etc.
   that is to say, in the present case, a set of indicators focused on the used services. Algebric formula of the indicators may be simply pre-programmed by the operator as configuration data. Basic case could be an average formula of the different subscribers values "number of SMS used" per billing zone (all formula are possible depending on the operator needs, this is fully open). Then, considering for instance the Zone_relevance_SMS_service indicator values obtained per billing zone, and depending the fixed threshold, the operator shall be proposed for each concerned billing zone (i.e. for example of which indicator value is inferior to the threshold) a dedicated text related to SMS service for related billing zone subscribers invoice.
   If the operator confirms, the field "marketing text" of the invoice is then automatically filled during the bill generation (production of the whole invoices), with various values linked to the subscribers and their pertaining to a given billing zone.
   Finally, the analysis can be pre-programmed and launched by batch in the days previous to the full Bill Generation process (treatment of the whole postpaid subscribers invoices at the end of each month).

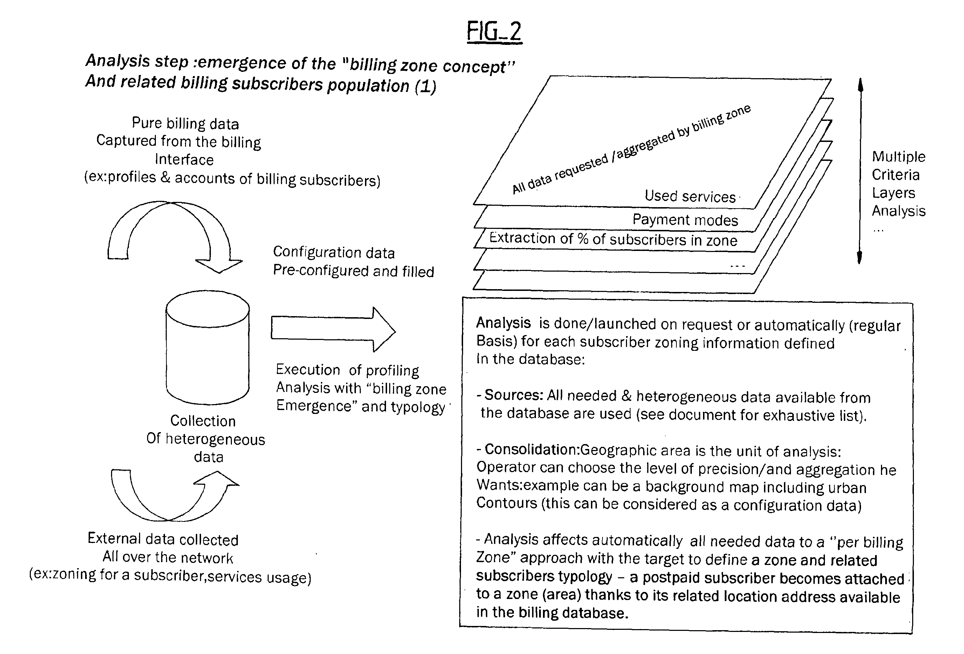

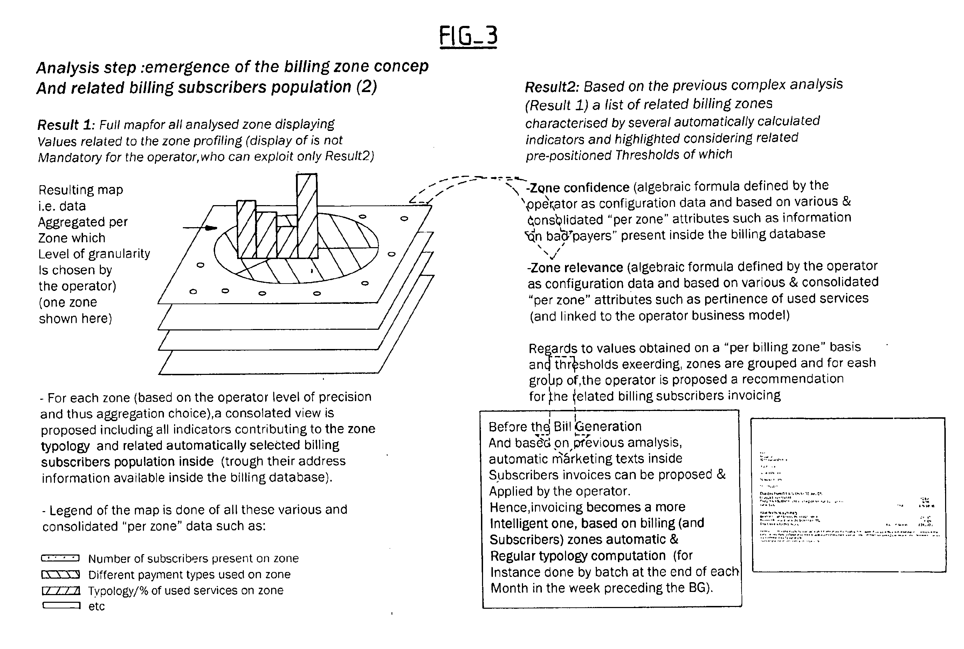

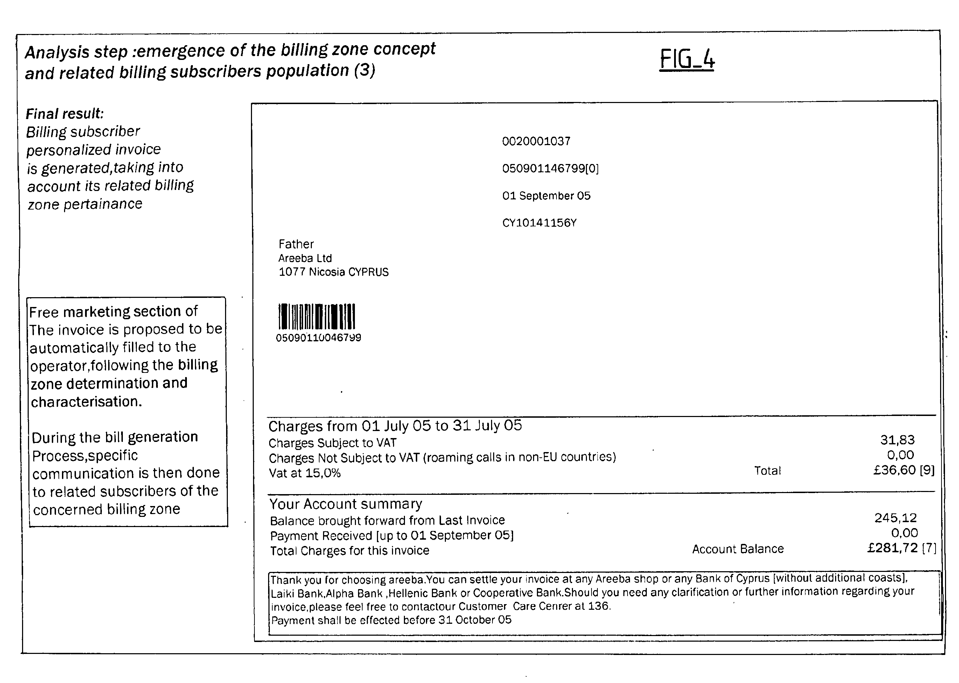

Figures 2 to 4 propose synthetic pictures explaining the related complex subscribers profiling "per billing zone" analysis.

It has to emphasized the idea of emergent "billing zone" concept, which is based on various criteria. This dynamic "billing zones" are computed regularly for instance before the billing cycle. In terms of typology, their comparison, from one computation to another one, is also possible. Hence, each zone, thanks to its attributes such as zone relevance, can be followed in time also and in terms of evolution (behaviours evolutions).

## Claims

1. Method for generating invoices related to subscribers of a telecommunication network, **characterized in that** :
- collecting billing data corresponding to said subscribers,
- gathering said collected data with heterogeneous data coming from other network equipments of the telecommunication network, such as Intelligent network elements, home location registers, Authentification Authorisation Accounting server, and data coming from other systems such as resource partners, roaming data, to enrich the data corresponding to the users,
- accessing to a variety of subscriber criteria via the gathering step, such as call characteristics, subscribers characteristics and related attributes, subscription characteristics, subscriber payment modes and financial behaviour, subscribers' location,
- for each billing zone, analyzing the subscribers' population by selecting it according to a subset of said criteria and by applying statistical means thereon,
- generating invoices related to the subscribers as a function of the analysis results for each billing zone.

2. Method according to the claim 1, **characterized in that** the analysis step takes into account, for each billing zone, a zone confidence value and a respective threshold, which may provide with a bad payers information based, and **in that** the analysis step takes into account a zone relevance value which is related to the pertinence of the used services.

3. Method according to the claim 1 or 2, **characterized in that** the zone confidence formula is fixed by the network operator as a configuration data.

4. Method according to any of the claims 1 to 3, **characterized in that** the analysis results are displayed in the reporting manager display means, using a cartographical background to display the various consolidated data at the billing zone level.

5. Method according to the claim 4, **characterized in that** the different billing zones are proposed, on the reporting manager's display means, through a list, for instance the ones which the Zone confidence value and/or the Zone relevance value overpass (or is below, depending the indicator usage) a set of thresholds previously fixed by the operator, and **in that** the network operator is proposed, following the different obtained values, to get an automatic filling of related subscribers invoices, considering the operator may have preconfigured a set of messages to be addressed to the different subscribers in relationship with the billing zone results and characteristics.

6. System for the implementation of the method according to any of claims 1 to 5.
